# EUROPÄISCHE PATENTANMELDUNG

(11) **EP 1 832 691 A1**
(43) Veröffentlichungstag der Anmeldung: **12.09.2007**
(21) Anmeldenummer: 07004867.3
(22) Anmeldetag: 09.03.2007
(51) Int. Cl.: E04C 2/34, E04C 2/36, A47B 96/20, B32B 3/06, E04C 2/296

(54) **Stützleiste für eine Verbundplatte**

(30) Priorität: 11.03.2006 DE 202006003857 U
(71) Anmelder: W. Döllken & Co. GmbH, 45964 Gladbeck (DE)
(72) Erfinder: Meyer Zudrewer, Jens, 40882 Ratingen (DE); Petrakis, Jordanis, 42277 Wuppertal (DE)
(74) Vertreter: von dem Borne, Andreas

(57) **Zusammenfassung**

Die Erfindung betrifft eine Stützleiste für eine Verbundplatte, wobei die Verbundplatte zumindest zwei Deckschichten und zumindest eine zwischen den Deckschichten angeordnete Kernschicht aufweist, wobei die Stützleiste an zumindest einer der Schmalseiten der Verbundplatte befestigbar ist und wobei auf der Stützleiste eine Deckleiste befestigbar ist. Die Stützleiste ist als zumindest bereichsweise perforierte Stützleiste mit zumindest einer aus einer Vielzahl von Durchbrechungen bestehenden Perforation ausgebildet.

## Beschreibung

Die Erfindung betrifft eine Stützleiste für eine Verbundplatte, wobei die Verbundplatte zumindest zwei Deckschichten und zumindest eine zwischen den Deckschichten angeordnete Kernschicht aufweist, wobei die Stützleiste an zumindest einer der Schmalseiten bzw. Stirnseiten der Verbundplatte befestigt bzw. befestigbar ist und wobei auf der Stützleiste eine Deckleiste befestigt oder befestigbar ist. - Eine solche Stützleiste bildet einen Verschluss für die Schmalseite einer Verbundplatte. Eine solche Verbundplatte wird auch als Leichtbauplatte oder Sandwichplatte bezeichnet und beispielsweise als Möbelplatte oder dergleichen eingesetzt. Die Deckschichten bzw. Decklagen werden dabei vorzugsweise von verhältnismäßig dünnen Holzwerkstoffplatten, z. B. Spanplatten, MDF-Platten oder dergleichen gebildet. Die Erfindung umfasst jedoch auch Verbundplatten, bei denen eine oder beide Deckschichten aus Kunststoff oder Metall, z. B. Aluminium, gefertigt sind. Die Deckschichten können im Übrigen selbst mehrlagig bzw. mehrschichtig ausgebildet sein. Die Kernschicht bzw. Mittellage besteht beispielsweise auch aus einer Wabenstruktur aus z. B. Papier oder Pappe, welche z. B. mittels Klebstoff mit den Deckschichten verbunden ist. Bei der Herstellung von beispielsweise Möbelplatten ist es üblich, die Schmalseiten mit Deckleisten aus thermoplastischem Kunststoff zu versehen, wobei diese Deckleisten auch als Kanten, Dekorkanten oder Möbelkanten bezeichnet werden. Während bei der Befestigung von solchen Deckleisten an massiven Holzwerkstoffplatten, z. B. Spanplatten, eine ausreichende Befestigungsfläche an den Schmalseiten der Spanplatte zur Verfügung steht, bereitet die Befestigung von Deckleisten an Verbundplatten mit Kernschicht regelmäßig Probleme. Aus diesem Grunde werden an den Schmalseiten zunächst Stützleisten bzw. Stützkanten befestigt, welche dann eine ausreichende Befestigungsfläche zum Befestigen der eigentlichen Deckleiste bilden.

Bei einer bekannten Verbundplatte der eingangs beschriebenen Art wird zumindest in eine der Stirnseiten im Zuge der Herstellung eine Nut eingebracht, wobei in diese Nut eine Stützleiste bzw. Profilleiste eingebracht wird und auf dieser Profilleiste dann eine weitere Profilleiste, z. B. eine Deckleiste aufgebracht wird. Bei den insoweit bekannten Stützleisten handelt es sich um solche mit einer strukturierten Oberfläche, wodurch die Verklebung der Deckleiste an der Stützleiste verbessert werden soll. Insoweit kann es sich um Profilleisten mit einer mikroporösen Schaumstruktur handeln, wobei diese Schaumstruktur gegebenenfalls im Zuge einer Fräsbearbeitung freigelegt wird (vgl. DE 20 2005 003 730 U1). Um eine ausreichende Verklebung zu gewährleisten ist folglich stets eine mechanische Bearbeitung erforderlich. Im Übrigen sind die bekannten Stützkanten wegen ihrer hohen Eigensteifigkeit nur bedingt für eine Radienverarbeitung geeignet.

Der Erfindung liegt das technische Problem zugrunde, eine Stützleiste für eine Verbundplatte der eingangs beschriebenen Art zu schaffen, welche sich durch niedrige Herstellungs- und Montagekosten auszeichnet und eine einwandfreie Befestigung der Deckleiste ermöglicht. Außerdem soll eine Verbundplatte mit zumindest einer solchen Stützleiste geschaffen werden.

Zur Lösung dieser Aufgabe lehrt die Erfindung bei einer gattungsgemäßen Stützleiste für eine Verbundplatte der eingangs beschrieben Art, dass die Stützleiste als zumindest bereichsweise perforierte Stützleiste mit einer aus einer Vielzahl von Durchbrechungen bestehenden Perforation ausgebildet ist

Die Durchbrechungen erstrecken sich über die gesamte Dicke der Stützkante, so dass eine echte Perforation mit die Stützkante vollständig durchgreifenden Durchbrechungen bzw. Löchern vorgesehen ist.

Dabei geht die Erfindung von der Erkenntnis aus, dass die Perforationen bei Verklebung der Deckleiste mit z. B. einem Schmelzkleber bzw. Hotmelt-Kleber eine verbesserte Haftung an der Stützkante bewirken. Denn der in die Durchbrechungen eindringende Kleber führt zu einer extrem hohen mechanischen Verankerung des Klebstoffes in den Durchbrechungen, so dass die Verklebungsgilte der Deckleiste bzw: Dekorkante deutlich verbessert wird. Dabei besteht sogar die Möglichkeit, dass der Schmelzkleber zum Teil die Durchbrechung vollständig durchdringt und hinter die Stützkante gelangt, so dass der ausgehärtete Schmelzkleber dann insgesamt die Stützkante im Sinne einer Verankerung hintergreifen kann. Ein solch einwandfreier Verbund gelingt sogar dann, wenn auf eine mechanische Bearbeitung, z. B. Fräsbearbeitung der Oberfläche der Stützkante nach dem Befestigen der Stützkante und vor dem Befestigen der Deckleiste verzichtet wird. Denn es ist nicht länger erforderlich, dass die Stützleiste eine strukturierte Oberfläche zur Verbesserung der Haftung aufweist. Die Erfindung umfasst jedoch auch Ausführungsformen, bei welchen die Stützleiste nach dem Befestigen an der Verbundplatte und vor dem Befestigen der Deckleiste einer nachträglichen mechanischen Bearbeitung. z. B. einer Fräsbearbeitung unterzogen wird. Denn im Rahmen der Erfindung wird die Stützkante vorzugsweise in eine in die Schmalseite der Leichtbauplatte eingebrachte Stützkantenaufnahme eingesetzt. Bei einer solchen Stützkantenaufnahme kann es sich um eine Nut handeln. Die Tiefe der Nut entspricht dabei im Wesentlichen der Dicke der einzusetzenden Stützkante, damit anschließend die Deckleiste flächenbündig an der Schmalseite der Verbundplatte befestigt werden kann. Aus fertigungstechnischer Hinsicht kann es jedoch zweckmäßig sein, die Stützkante mit einer Dicke zu fertigen, die etwas größer als die Tiefe der Nut ist, so dass dann der über die Nut der Verbundplatte überstehende Teil der Stützleiste bündig zur Stirnseite der Verbundplatte abgefräst bzw. abgetragen wird. Von besonderer Bedeutung ist jedoch, dass im Rahmen der Erfindung dieses evtl. Abtragen nur noch der Erzeugung einer bündigen Klebefläche für die Deckleiste dient und die Erzeugung einer strukturierten Oberfläche wegen der bereits vorhandenen Perforation nicht mehr erforderlich ist. Die Verwendung von Stützleisten mit einer (mikroporösen) Schaumstruktur ist folglich nicht mehr erforderlich. Die Erfindung umfasst jedoch auch Stützleisten aus einem geschäumten Kunststoff. Außerdem umfasst die Erfindung auch Stützleisten aus anderen Materialien, z. B. aus Holzwerkstoffen, aus Papier oder aus Pappe. Holzwerkstoffe meint im Rahmen der Erfindung z. B. MDF. Holzextruder oder Furnier, Pappe meint im Rahmen der Erfindung insbesondere Hartpappe. Stets handelt es sich auch dabei um perforierte Stützleisten.

Die Durchbrechungen der Perforation können einen (äußeren) Abstand zueinander von 1 mm bis 15 mm, z. B. 2 mm bis 10 mm, vorzugsweise 4 mm bis 6 mm aufweisen. Nach einem weiteren Vorschlag der Erfindung sind die Durchbrechungen der Perforation in der Draufsicht auf die Stützkante rund, oval, rechteckig, quadratisch, mehreckig oder auch sternförmig ausgebildet. Ferner ist es zweckmäßig, wenn die z. B. runden Durchbrechungen einen Durchmesser von 0,1 mm bis 5 mm, z. B. 0,1 mm bis 1 mm, vorzugsweise 0,2 mm. bis 0,8 mm, besonders bevorzugt 0,3 mm bis 0,5 mm aufweisen, Bei nicht runden Durchbrechungen beziehen sich diese Angaben auf den minimalen und/oder maximalen Durchmesser.

Nach einem weiteren Vorschlag der Erfindung ist vorgesehen, dass die Durchbrechungen einen sich von der Oberseite zur Unterseite der Stützleiste aufweitenden Querschnitt aufweisen. Oberseite meint dabei die der Deckleiste zugewandte Seite der Stützleiste und Unterseite die der Verbundplatte bzw. Kernschicht zugewandte Seite der Stützleiste. Dabei geht die Erfindung von der Erkenntnis aus, dass ein solcher sich nach hinten bzw. innen aufweitender Querschnitt der Durchbrechungen bzw. Löcher eine besonders feste Verankerung durch den aushärtenden Schmelzkleber gewährleistet. Insofern kann beispielsweise ein konischer oder auch pyramidaler Lochdurchgang verwirklicht sein. Es kann jedoch auch ein Zwickel in der Lochdurchgangsmitte bzw. in der Mitte der Durchbrechung vorgesehen sein. Die beschriebenen Lochgeometrien weisen gleichsam eine Hinterschneidung auf, welche die beschriebenen Vorteile bei der Verklebung mit den Dekorleisten bewirken. Die Erfindung umfasst aber auch Durchbrechungen mit über die gesamte Tiefe konstantem Durchmesser, z. B. zylindrische Durchbrechungen.

Ferner schlägt die Erfindung vor, dass die Durchbrechungen in mehreren quer zur Stützleistenlängsrichtung angeordneten Reihen angeordnet sind. Dabei besteht die Möglichkeit, dass die Reihen ohne Versatz zueinander unter Bildung eines gleichmäßigen Rasters ausgebildet sind. Der Abstand der Reihen und Spalten kann dabei identisch sein. Es besteht aber auch die Möglichkeit, dass jeweils zwei benachbarte Reihen quer zur Stützleistenlängsrichtung versetzt zueinander angeordnet sind. Der Versatz zweier Reihen zueinander kann dabei z, B. 2 mm bis 6 mm, vorzugsweise 3 mm bis 5 mm betragen.

Die Stützleisten sind vorzugsweise aus Kunststoff, insbesondere aus einem thermoplastischen Kunststoff gefertigt. Dabei kann es sich um ein Polyolefin, z. B. Polypropylen (PP) oder Polyethylen (PE), oder auch um ein Polystyrol (z. B. ABS), sowie um ein Polyvinylchlorid (PVC) oder auch um einen Polyester (z. B. PET) handeln. Die Werkstoffe zur Herstellung der Stützleiste können ungefüllt oder auch mit Füllstoffen gefüllt sein. Bei diesen Füllstoffen kann es sich um Füllstoffe auf mineralischer Basis (z. B. Kreide oder Talkum) oder auch auf organischer Basis (z. B. Holzfasern) handeln.

Die Erfindung umfasst jedoch nicht nur Stützleisten aus Kunststoff, sondern auch aus anderen Materialien, z. B. aus Holzwerkstoffen oder aus Pappe.

In bevorzugter Ausführungsform weist die Stützkante eine Dicke von 1 mm bis 30 mm, z. B. von 1 mm bis 6 mm, vorzugsweise 1,5 mm bis 5,5 mm auf. Die Breite der Stützkante ist an die Breite der Verbundplatte bzw. an die Breite der Stützkantenaufnahme, z. B. Nut, angepasst. Insofern ist die Breite der Stützkante regelmäßig etwas geringer als die Breite der darauf zu befestigenden Deckleiste.

Die Stützleisten können einen Elastizitätsmodul von 5 MPa bis 15000 MPa aufweisen, Vorzugsweise werden Stützkanten verwendet, die einen Elastizitätsmodul von 900 MPa bis 3500 MPa, z. B. 900 MPa bis 2000 MPa aufweisen. Diese Angabe des Elastizitätsmoduls bezieht sich dabei auf die zunächst unperforierte Leiste in einem vorgefertigten Zustand.

Insgesamt zeichnen sich die erfindungsgemäßen Stützleisten durch eine hohe Flexibilität bzw. Biegeelastizität aus, so dass sie eine hervorragende Radienverarbeitung z. B. bei Möbelplatten mit abgerundeten "Ecken" erlauben. Dieses wird einerseits durch die Wahl der Werkstoffsteifigkeit erreicht und andererseits wird die Biegeelastizität durch die eingebrachten Perforationen noch weiter erhöht. Dennoch bieten die Stützleisten eine stabile Basis für die anschließende Befestigung der Deckleisten.

Die der Verbundplatte zugewandte Unterseite der Stützkante ist vorzugsweise bereichsweise mit einem Haftvermittler versehen bzw, beschichtet, um die Befestigung der Stützleiste im Bereich der Nut bzw, an der Schmalseite der Verbundplatte zu verbessern. Die Befestigung der Deckleiste bzw. Dekorleiste an der Stützkante erfolgt vorzugsweise mittels eines Schmelzklebers (Hotmelt-Kleber). Die Deckleiste ist dabei vorzugsweise ebenfalls aus Kunststoff gefertigt. Es kann sich um an sich bekannte Deckleisten bzw. Dekorkanten handeln, die auch als Kantenbänder bezeichnet werden und an Schmalseiten herkömmlicher Möbelplatten aus z. B. Spanplatten oder dergleichen befestigt werden,

Ein wesentlicher Vorteil der perforierten Stützleiste ist im Zusammenhang mit dem Einsatz von Schmelzklebern oder Hotmelt darin zu sehen, dass dieser sich - ähnlich wie bei den Schmalseiten einer Spanplatte - in die Perforationen und folglich in die Schmalseite verdrücken lässt. Aus diesem Grunde wird ein einwandfreies bzw. konstantes Fugenbild erzielt, so dass die erfindungsgemäßen Verbundplatten sich durch einen einwandfreien ästhetischen Eindruck auszeichnen.

Es besteht im Übrigen nicht nur die Möglichkeit, dass die Stützleiste und/oder die Deckleiste verklebt werden, sondern die Stützleiste und/oder die Deckleiste sind auch verschweißbar, z. B. im Wege des Laserstrahlschweißens oder Ultraschallschweißens.

Im Rahmen der Erfindung wird die beschriebene perforierte Stützleiste als Verbundplattenverschluss selbstständig unter Schutz gestellt. Insofern kommt es hier im besonderen Maße auf die Verwendung einer perforierten Leiste als Stützleiste für die Befestigung einer Deckleiste an einer Schmalseite einer Verbundplatte an. Die Stützleisten bzw. Stützkanten können als Rollenware hergestellt werden und sind insoweit gut maschinengängig. Sowohl in der Radienverarbeitung als auch bei Kantenbandleimmaschinen für die Gerade ist die erfindungsgemäße Stützkante gut zu verarbeiten. Durch die Perforation wird die Flexibilität ohne Stabilitätsverlust hinsichtlich ihrer Stützwirkung für die Wabenplatte weiter verbessert.

Gegenstand der Erfindung ist auch eine Verbundplatte mit zumindest zwei Deckschichten und zumindest einer zwischen den Deckschichten angeordneten Kernschicht, wobei an zumindest einer der Schmalseiten der Verbundplatte eine Stützleiste der beschriebenen Art befestigt ist und wobei auf dieser Stützleiste eine Deckleiste befestigt ist oder befestigbar ist. Vorzugsweise ist diese Stützleiste in eine in die Schmalseite der Verbundplatte eingebrachte Stützleistenaufnahme, z. B. Nut, der Verbundplatte einsetzbar. Insofern wird im Rahmen der Erfindung auch eine Verbundplatte mit einer oder mehreren erfindungsgemäßen Stützleisten unter Schutz gestellt.

Im Folgenden wird die Erfindung anhand einer lediglich ein Ausführungsbeispiel darstellenden Zeichnung näher erläutert. Es zeigen:
- Fig. 1: eine Verbundplatte mit einer erfindungsgemäßen Stützleiste in perspektivischer Darstellung,
- Fig. 2: einen Querschnitt durch den Gegenstand nach Fig. 1,
- Fig. 3: den Gegenstand nach Fig. 1 ohne Deckleiste und
- Fig. 4: eine Stützleiste in abgewandelter Ausführungsform.

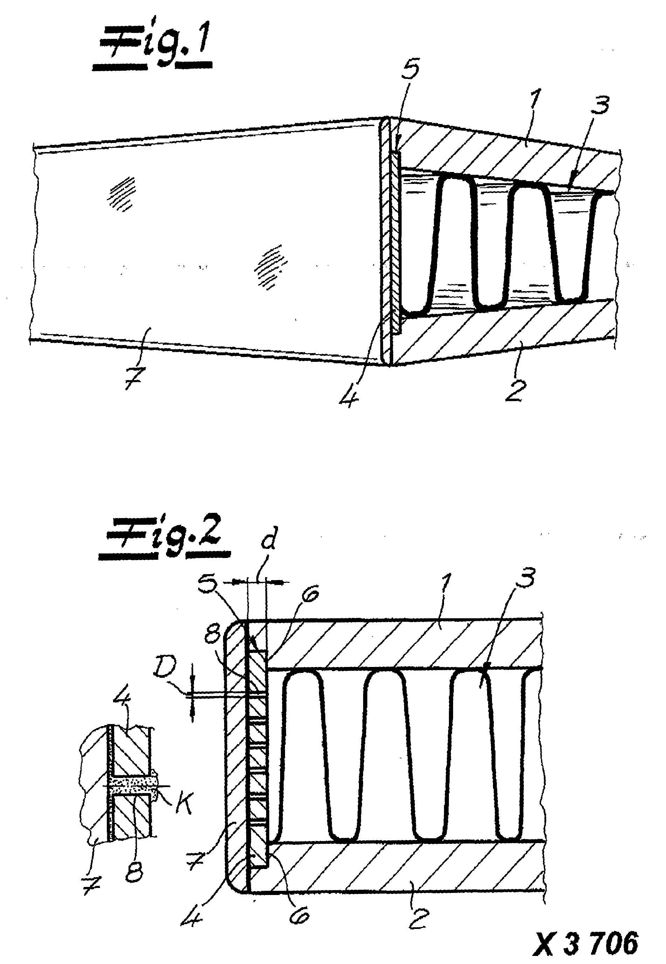

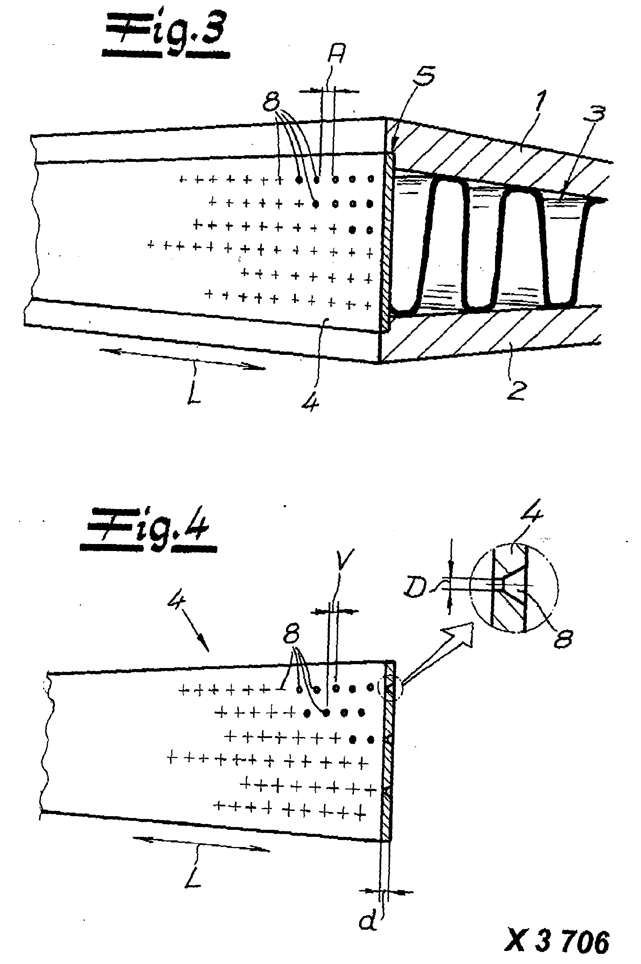

In den Fig. 1 und 2 ist .eine erfindungsgemäße Verbundplatte bzw. Sandwichplatte mit zwei Deckschichten 1, 2 und einer zwischen den Deckschichten angeordneten Kernschicht 3 dargestellt Die Deckschichten 1, 2 sind als Holzwerkstoffplatten ausgebildet, während die Kernschicht 3 aus einer Wabenstruktur aus z. B. Pappe beseht. Eine solche Verbundplatte bzw. Wabenplatte wird auch als Leichtbauplatte bezeichnet und als beispielsweise Möbelplatte verwendet. An einer der Schmalseiten bzw. Stirnseiten der Verbundplatte ist eine Stützleiste 4 aus Kunststoff befestigt. Diese Stützleiste 4 ist in eine Nut 5 eingebracht, welche von zwei stufenartigen Ausnehmungen 6 in den Deckschichten 1, 2 gebildet wird. Auf der Stützleiste 4 ist dann eine Deckleiste 7, die auch als Dekorkante bezeichnet wird, befestigt. Insoweit kann es sich um eine an sich bekannte Dekorkante aus Kunststoff handeln.

Erfindungsgemäß ist die Stützleiste 4 als über ihre gesamte Länge (oder auch nur bereichsweise) perforierte Stützleiste mit einer aus einer Vielzahl von Durchbrechungen 8 bestehenden Perforation ausgebildet. Dieses ist insbesondere in Fig. 3 erkennbar, wobei in dieser Darstellung die Deckleiste nicht gezeigt ist. Es ist erkennbar, dass die Oberfläche der perforierten Stützleiste 4 (ggf. nach einer Fräsbearbeitung) bündig mit den Stirnseiten der beiden Deckschichten 1, 2 abschließt, so dass anschließend eine an sich bekannte Deckleiste 7 stirnseitig an der Verbundplatte befestigt werden kann. Die Befestigung der Deckleiste 7 an der Stützleiste 4 erfolgt mit einem Schmelzkleber K, der erfindungsgemäß in die Durchbrechungen 8 eindringen kann und so zu einer nietenartigen Verankerung führt, da ein Teil des Schmelzklebers K die Durchbrechungen 8 vollständig durchdringen und die Rückseite der Stützkante 4 hintergreifen kann (vgl. den vergrößerten Ausschnitt in Fig. 2). Es kommt folglich zu einer extrem hohen mechanischen Verankerung des Schmelzklebers K in den Durchbrechungen 8, so dass die Verklebungsgüte der Deckleiste 7 bzw. Dekorkante deutlich verbessert wird.

Im Ausführungsbeispiel sind die Durchbrechungen 8 in mehreren quer zur Stützkantenlängsrichtung L angeordneten Reihen angeordnet. Fig. 3 zeigt dabei eine Ausführungsform, bei weicher die Reihen ohne Versatz unter Bildung eines gleichmäßigen Rasters ausgebildet sind. Demgegenüber zeigt Fig. 4 eine abgewandelte Ausführungsform, bei welcher jeweils zwei benachbarte Reihen quer zur Stützkantenlängsrichtung L versetzt zueinander angeordnet sind. Der Versatz V beträgt dabei im Ausführungsbeispiel etwa 3 mm bis 5 mm.

Die Durchbrechungen weisen einen (äußeren) Abstand A zur jeweils nächsten Durchbrechung 8 von 1 mm bis 15 mm, z. B. 2 mm bis 10 mm, vorzugsweise 4 mm bis 6 mm auf. Im Ausführungsbeispiel sind 5 mm vorgesehen. Die Durchbrechungen 8 sind in der Draufsicht rund ausgebildet, wobei hier ein Durchmesser D von 0,1 mm bis 5 mm, z. B. 0,1 mm bis 1 mm, vorzugsweise 0,2 mm bis 0,8 mm zweckmäßig ist. Im Ausführungsbeispiel beträgt der Durchmesser D etwa 0,3 mm bis 0,5 mm.

Fig. 4 zeigt eine bevorzugte Ausführungsform der Erfindung, bei welcher die Durchbrechungen 8 einen sich von der Oberseite zur Unterseite der Stützleiste aufweitenden Querschnitt bzw. Durchmesser aufweisen. Insoweit sind gleichsam konische bzw. kegeistumpfförmige Durchbrechungen 8 verwirklicht (bzw. Durchbrechungen, die über einen Teil ihrer Tiefe konisch bzw. kegelstumpfförmig ausgebildet sind), so dass die Durchbrechungen 8 eine Art Hinterschneidung aufweisen, welche die Verankerung durch den Schmelzkleber weiter verbessert. Bei solchen Ausführungsformen mit Hinterschneidung ergibt sich die beschriebene Verankerung bereits dann, wenn der Schmelzkleber die Hinterschneidung hinterfasst, so dass der Schmelzkleber die Durchbrechung nicht vollständig durchdringen muss.

Demgegenüber zeigen Fig. 2 und 3 eine abgewandelte Ausführungsform, bei welcher der Durchmesser D der Durchbrechungen 8 Ober die gesamte Tiefe bzw. Leistendicke konstant ist, so dass die Durchbrechungen 8 eine zylindrische Form aufweisen.

Bei den Ausführungsformen mit sich aufweitendern Querschnitt beziehen sich die Angaben über den Durchmesser der Durchbrechungen 8 auf den minimalen Durchmesser, welcher vorzugsweise im Bereich der Oberseite der Stützleiste 4 vorgesehen ist.

Die Stützleiste 4 selbst weist eine Dicke d von 1 mm bis 6 mm, z. B. 1,5 mm bis 5,5 mm auf. Zur Verbesserung des Verbundes zwischen der Stützleiste 4 und der Verbundplatte bzw. den Deckschichten 1, 2 wird die der Verbundplatte zugewandte Unterseite der Stützleiste mit einem Haftvermittler beschichtet.

## Patentansprüche

1. Stützleiste für eine Verbundplatte, wobei die Verbundplatte zumindest zwei Deckschichten (1, 2) und zumindest eine zwischen den Deckschichten (1, 2) angeordnete Kernschicht (3) aufweist,
wobei die Stützleiste (4) an zumindest einer der Schmalseiten der Verbundplatte befestigbar ist und
wobei auf der Stützleiste (4) eine Deckleiste (7) befestigbar ist, **dadurch gekennzeichnet,**
**dass** die Stützleiste (4) als zumindest bereichsweise perforierte Stützleiste (4) mit zumindest einer aus einer Vielzahl von Durchbrechungen (8) bestehenden Perforation ausgebildet ist.

2. Stützleiste nach Anspruch 1, **dadurch gekennzeichnet, dass** die Stützleiste (4) in eine in die Schmalseite der Verbundplatte eingebrachte Stützleistenaufnahme, z. B. Nut (5), einsetzbar ist.

3. Stützleiste nach Anspruch 1 oder 2, **dadurch gekennzeichnet, dass** die Durchbrechungen (7) der Perforation einen Abstand (A) von 1 mm bis 15 mm, z. B. 2 mm bis 10 mm, vorzugsweise 4 mm bis 6 mm aufweisen.

4. Stützleiste nach einem der Ansprüche 1 bis 3, **dadurch gekennzeichnet, dass** die Durchbrechungen (7) der Perforation in der Draufsicht auf die Stützleiste (4) rund, oval, rechteckig, quadratisch, mehreckig oder sternförmig ausgebildet sind.

5. Stützleiste nach einem der Ansprüche 1 bis 4, **dadurch gekennzeichnet, dass** die Durchbrechungen (7) einen Durchmesser (D) von 0,1 mm bis 5 mm, z. B. 0,1 mm bis 1 mm, vorzugsweise 0,2 mm bis 0,8 mm, besonders bevorzugt 0,3 mm bis 0,5 mm aufweisen.

6. Stützleiste nach einem der Ansprüche 1 bis 5, **dadurch gekennzeichnet, dass** die Durchbrechungen (7) einen sich von der Oberseite zur Unterseite der Stützleiste (4) aufweitenden Querschnitt bzw. Durchmesser aufweisen, und/oder mit einer Hinterschneidung versehen sind.

7. Stützleiste nach einem der Ansprüche 1 bis 6, **dadurch gekennzeichnet, dass** die Durchbrechungen (7) in mehreren quer zur Stützleistenlängsrichtung (L) angeordneten Reihen angeordnet sind.

8. Stützleiste nach Anspruch 7, **dadurch gekennzeichnet, dass** die Reihen ohne Versatz zueinander angeordnet sind.

9. Stützleiste nach Anspruch 7, **dadurch gekennzeichnet, dass** jeweils zwei benachbarte Reihen quer zur Stützleistenlängsdchtung (L) versetzt zueinander angeordnet sind, wobei der Versatz (V) vorzugsweise 2 mm bis 6 mm, z. B. 3 mm bis 5 mm beträgt.

10. Stützleiste nach einem der Ansprüche 1 bis 9, **dadurch gekennzeichnet, dass** die Stützleiste (4) aus Kunststoff, vorzugsweise aus einem thermoplastischen Kunststoff, z. B. einem Polyolefin, einem Polystyrol, einem Polyester oder einem Polyvinylchlorid gefertigt ist.

11. Stützleiste nach einem der Ansprüche 1 bis 9, **dadurch gekennzeichnet, dass** die Stützleiste (4) eine Dicke (d) von 1 mm bis 30 mm, z. B. 1 mm bis 6 mm, vorzugsweise 1,5 mm bis 5,5 mm aufweist.

12. Stützleiste nach einem der Ansprüche 1 bis 11, **dadurch gekennzeichnet, dass** die Stützleiste (4) einen Elastizitätsmodul von 5 MPa bis 15000 MPa, z. B. 900 MPa bis 3500 MPa aufweist.

13. Stützleiste nach einem der Ansprüche 1 bis 12, **dadurch gekennzeichnet, dass** die der Verbundplatte zugewandte Unterseite der Stützleiste (4) zumindest bereichsweise mit einem Haftvermittler versehen ist.

14. Stützleiste nach einem der Ansprüche 1 bis 13, **dadurch gekennzeichnet, dass** die Deckleiste (8) an der Stützleiste (4) mittels eines Schmelzklebers befestigbar ist.

15. Verbundplatte mit zumindest zwei Deckschichten (1, 2) und zumindest einer zwischen den Deckschichten (1, 2) angeordneten Kernschicht (3), wobei an zumindest einer der Schmalseiten der Verbundplatte zumindest eine Stützleiste nach einem der Ansprüche 1 bis 14 befestigt ist, wobei auf der Stützleiste (4) eine Deckleiste (7) befestigt oder befestigbar ist.

16. Verbundplatte nach Anspruch 15, **dadurch gekennzeichnet, dass** die Stützleiste (4) in eine in die Schmalseite der Verbundplatte eingebrachte Stützleistenaufnahme, z. B. Nut (5), eingesetzt ist.
